# EUROPEAN PATENT APPLICATION

(11) **EP 4 748 464 A1**
(43) Date of publication of application: **27.05.2026**
(21) Application number: 25215895.1
(22) Date of filing: 14.11.2025
(51) Int. Cl.: B01D 5/00

(54) **ASPHALT TANK VAPOR CONDENSER**

(30) Priority: 21.11.2024 US 202418955314
(71) Applicant: Gencor Industries, Inc., Orlando, Florida 32810 (US)
(72) Inventor: Mollick, Joseph, T., Longwood, Florida (US)
(74) Representative: Secerna LLP

(57) **Abstract**

A vapor condenser for an asphalt tank includes an inlet passage, a plurality of centrally positioned core tubes, a plurality of outer tubes disposed surrounding the core tubes, and a lower compartment disposed between the inlet passage and the core and outer tubes. The lower compartment is configured to distribute fumes from the inlet passage into the core and outer tubes. An upper compartment disposed at distal ends of the core and outer tubes includes a condenser lid and an outlet passage between the distal ends of the core and outer tubes and the condenser lid.

## Description

### BACKGROUND

The present invention relates to an asphalt tank vapor condenser and, more particularly, to an asphalt tank vapor condenser designed to be effective without the need for fiber filter media or a convoluted piping path to condense the vapors before the fumes exit the condenser.

An asphalt tank vapor condenser is used to capture and condense vapors that are released as hot liquid asphalt is stored in tanks used in the production of asphaltic road mixes. Asphalt (or bitumen) is heated to high temperatures to maintain a workable, liquid state, and this heating can release a mix of hydrocarbon vapors, some of which may be volatile organic compounds (VOCs) or hazardous air pollutants (HAPs). To control emissions, improve environmental safety, and potentially recover valuable hydrocarbons, an asphalt tank vapor condenser is used.

During the heating and handling of hot liquid asphalt, harmful gases like VOCs and HAPs can be released into the atmosphere. These compounds contribute to air pollution, smog formation, and environmental hazards. It is thus desirable to reduce these emissions. A vapor condenser reduces risks of vapors that may be harmful to workers, potentially causing respiratory issues or other health hazards. A vapor condenser captures and removes these emissions from the surrounding environment.

By condensing the vapor, some hydrocarbons that would otherwise be lost as emissions are captured and can be reused or recycled.

A problem with existing asphalt tank vapor condensers is that as the fumes enter the bottom compartment, the fumes will funnel into the fin tubes at the center of the condenser, and the air flow around the central fin tubes is minimal, thereby starving the outer tubes for flow where there is better exposure to moving air. Additionally, there is no restriction inside the tubes allowing the vapors to move quickly through the tubes resulting in a chimney effect minimizing the heat transfer inside the fin tubes. The noncondensed vapors then quickly move into the upper compartment and exit through holes in the side of the top compartment to the atmosphere as blue smoke fumes.

In some existing systems, to slow the advancement of the fumes to the atmosphere, the upper compartment is packed with a fiber media that gathers the submicron mist particles and light end hydrocarbons (aka, blue smoke). Otherwise, without the filter media, the device would be less effective as a condenser. As the media begins to become packed with hydrocarbons, the top can be removed, and the media can be replaced. This task, however, is not easy being on top of the vertical tank up in the air.

In another existing system, the fumes find their way into the bottom of the unit and up the tubes on the outside, then must change directions and go down, then up again, and down again to exit the piping. The fumes from asphalt heating and storage are heavy fumes. The gas path through the unit is restricted by the changes in direction and must be operating with a pressure restriction that may force the fumes to exit the top of the tank through the liquid vent pipe located inside the tank. The design is operating at the very brink of allowable back pressure, whereby some of the fumes find the path of least resistance is through the tank overflow vent pipe directly into the atmosphere.

### SUMMARY

According to a first aspect of the present invention there is provided a vapor condenser for an asphalt tank comprising:
an inlet passage;
a plurality of centrally positioned core tubes;
a plurality of outer tubes disposed surrounding the core tubes;
a lower compartment disposed between the inlet passage and the core and outer tubes, the lower compartment being configured to distribute fumes from the inlet passage into the core and outer tubes; and
an upper compartment disposed at distal ends of the core and outer tubes, the upper compartment including a condenser lid and an outlet passage between the distal ends of the core and outer tubes and the condenser lid.

Aptly, wherein the lower compartment is configured to distribute more fumes to the outer tubes than to the core tubes.

Aptly, wherein the lower compartment comprises a restricted orifice in fluid communication with the inlet passage.

Aptly, wherein at least some of the core tubes and the outer tubes comprise internal turbulators.

Aptly, wherein the at least some of the core tubes and the outer tubes comprise a central shaft, and wherein the internal turbulators comprise disks secured along the central shaft.

Aptly, wherein the core and outer tubes comprise fin tubes.

Aptly, wherein the fin tubes comprise exterior fins.

Aptly wherein the exterior fins are coated with a metallic paint.

Aptly, wherein the condenser lid extends radially outward of the outlet passage such that the outlet passage and the condenser lid define a flow turn.

Aptly, wherein the upper compartment comprises a drip ring that directs condensed liquids to a collection area.

Aptly, wherein the lower compartment, the core and outer tubes, and the upper compartment are configured to effect a pressure drop inside the condenser that is less than a force required to allow the fumes to escape from inside the asphalt tank to an overflow pipe.

According to a second aspect of the present invention there is provided a vapor condenser for an asphalt tank comprising:
an inlet passage;
a plurality of centrally positioned core tubes;
a plurality of outer tubes disposed surrounding the core tubes;
a lower compartment disposed between the inlet passage and the core and outer tubes, the lower compartment including a restricted orifice that is configured to distribute fumes from the inlet passage into the core and outer tubes, wherein the restricted orifice distributes more of the fumes to the outer tubes than to the core tubes; and
an upper compartment disposed at distal ends of the core and outer tubes, the upper compartment including a condenser lid an outlet passage between the distal ends of the core and outer tubes and the condenser lid, wherein the condenser lid extends radially outward of the outlet passage such that the outlet passage and the condenser lid define a flow turn.

Aptly, wherein at least some of the core tubes and the outer tubes comprise internal turbulators.

Aptly, wherein the at least some of the core tubes and the outer tubes comprise a central shaft, and wherein the internal turbulators comprise disks secured along the central shaft.

Aptly, wherein the core and outer tubes comprise fin tubes.

Aptly, wherein the fin tubes comprise exterior fins.

Aptly, wherein the exterior fins are coated with a metallic paint.

According to a third aspect of the present invention there is provided a method of condensing vapors from an asphalt tank with a vapor condenser that includes an inlet passage, a plurality of centrally positioned core tubes, a plurality of outer tubes disposed surrounding the core tubes, a lower compartment disposed between the inlet passage and the core and outer tubes, and an upper compartment disposed at distal ends of the core and outer tubes, the method comprising:
(a) distributing fumes from the inlet passage into the core and outer tubes;
(b) creating turbulence of the fumes inside the core and outer tubes;
(c) cooling the fumes as the fumes flow upward through the core and outer tubes to distal ends of the core and outer tubes;
(d) condensing vapors from the fumes; and
(e) directing the fumes to an outlet passage between the distal ends of the core and outer tubes and a condenser lid.

Aptly, wherein step (a) is practiced by distributing more of the fumes to the outer tubes than to the core tubes.

It is thus an objective of the described embodiments to provide a vapor condenser for an asphalt tank that overcomes the drawbacks with existing designs. The condenser of the described embodiments has a lower compartment that directs by restriction, some of the fumes to tubes at the core of the unit and in some embodiments more of the fumes to the outer tubes where they are better subjected to air movement by wind and air temperature. Devices or disks may be placed inside at least some of the tubes as turbulators to improve heat transfer from the fumes to the inside surface of the fin tubes, thereby improving performance and overall heat transfer efficiency.

The flow of fumes through the fin tubes is at a low velocity. A method to increase the heat transfer efficiency within a slow-moving fume is by creating turbulence inside the tube. Turbulent flow has more energy relative to a slow-moving laminar flow and makes for increased contact between the fume and the fin tube walls. The turbulence created by the restriction forces the fumes to the inside of the tube walls for more heat transfer and creates turbulence behind the restriction to mix and further wash the inside walls of the tubes using the fumes.

As the fumes move vertically through the tubes, they exit into an upper chamber thus creating more turbulence as the fumes must exit by moving downward and out around a small circumferential opening under the top "hat" of the lid or top of the unit. Slowing the flow down at the top of the unit exposes the fumes to the colder surface of the top and sides of the upper compartment, contributing to more exposed heat transfer surface of the cooler metal. By design, the restriction to flow or pressure drop inside the condenser is less than the force that would be required to allow the fumes to escape from inside the tank to the tank overflow pipe and down the length of the pipe dictated by the height of the tank, and exit the pipe. These internal design considerations provide for improved effectiveness without the need for fiber filter media or a convoluted piping path for the fumes to exit the condenser.

In an exemplary embodiment, a vapor condenser for an asphalt tank includes an inlet passage, a plurality of centrally positioned core tubes, a plurality of outer tubes disposed surrounding the core tubes, and a lower compartment disposed between the inlet passage and the core and outer tubes. The lower compartment is configured to distribute fumes from the inlet passage into the core and outer tubes. An upper compartment disposed at distal ends of the core and outer tubes includes a condenser lid and an outlet passage between the distal ends of the core and outer tubes and the condenser lid.

The lower compartment may be configured to distribute more fumes to the outer tubes than to the core tubes. The lower compartment may further include a restricted orifice in fluid communication with the inlet passage.

At least some of the core tubes and the outer tubes may include internal turbulators. The at least some of the core tubes and the outer tubes may include a central shaft, and the internal turbulators may include disks secured along the central shaft.

The core and outer tubes may be fin tubes. In this context, the fin tubes may include exterior fins, and the exterior fins may be coated with a metallic paint.

The condenser lid may extend radially outward of the outlet passage such that the outlet passage and the condenser lid define a flow turn.

The upper compartment may further include a drip ring that directs condensed liquids to a collection area.

The lower compartment, the core and outer tubes, and the upper compartment may be configured to effect a pressure drop inside the condenser that is less than a force required to allow the fumes to escape from inside the asphalt tank to an overflow pipe.

In another exemplary embodiment, a vapor condenser for an asphalt tank includes an inlet passage, a plurality of centrally positioned core tubes, a plurality of outer tubes disposed surrounding the core tubes, and a lower compartment disposed between the inlet passage and the core and outer tubes. The lower compartment includes a restricted orifice that is configured to distribute fumes from the inlet passage into the core and outer tubes. The restricted orifice distributes more of the fumes to the outer tubes than to the core tubes. An upper compartment disposed at distal ends of the core and outer tubes includes a condenser lid and an outlet passage between the distal ends of the core and outer tubes and the condenser lid. The condenser lid extends radially outward of the outlet passage such that the outlet passage and the condenser lid define a flow turn.

In yet another exemplary embodiment, a method of condensing vapors from an asphalt tank with the vapor condenser of the described embodiments includes the steps of (a) distributing fumes from the inlet passage into the core and outer tubes; (b) creating turbulence of the fumes inside the core and outer tubes; (c) cooling the fumes as the fumes flow upward through the core and outer tubes to distal ends of the core and outer tubes; (d) condensing vapors from the fumes; and (e) directing the fumes to an outlet passage between the distal ends of the core and outer tubes and a condenser lid.

### BRIEF DESCRIPTION OF THE DRAWINGS

These and other aspects and advantages will be described in detail with reference to the accompanying drawings, in which:

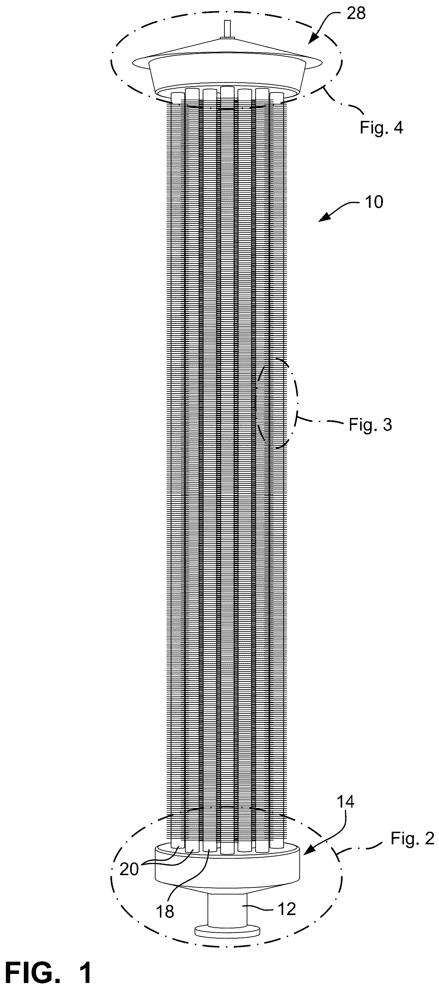

FIG. 1 shows the asphalt tank vapor condenser of the described embodiments;

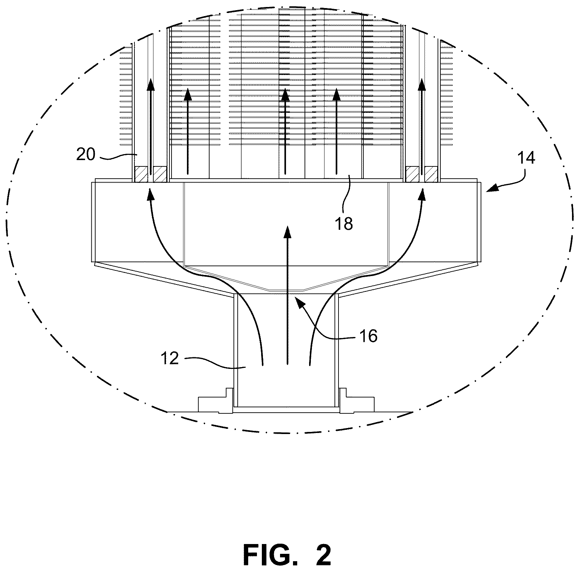

FIG. 2 is a close-up view of the inlet passage and lower compartment;
FIG. 3 shows details of the cooling tubes;
FIG. 4 is a close-up view of the upper compartment; and

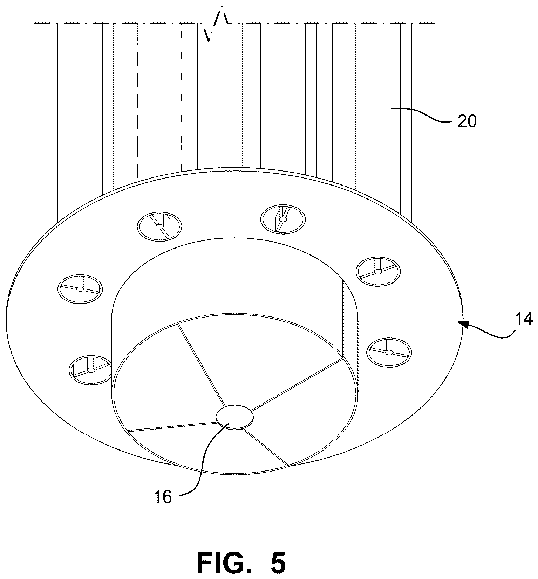

FIG. 5 shows the lower compartment and the restricted orifice.

### DETAILED DESCRIPTION

With reference to the drawings, a vapor condenser 10 may be positioned above an asphalt storage tank or processing unit (not shown). Vapors/fumes generated from heated asphalt are collected through a venting system and are drawn into the condenser 10 through ducts or the like.

The condenser includes an inlet passage 12 through which vapors from the heated asphalt flow. A lower compartment 14 includes a restricted orifice 16 in fluid communication with the inlet passage 12. The restricted orifice 16 distributes fumes from the inlet passage 12 into a plurality of centrally positioned core tubes 18 and a plurality of outer tubes 20 disposed surrounding the core tubes 18. In some embodiments, the restricted orifice 16 is configured to distribute more fumes to the outer tubes 20 than to the core tubes 18.

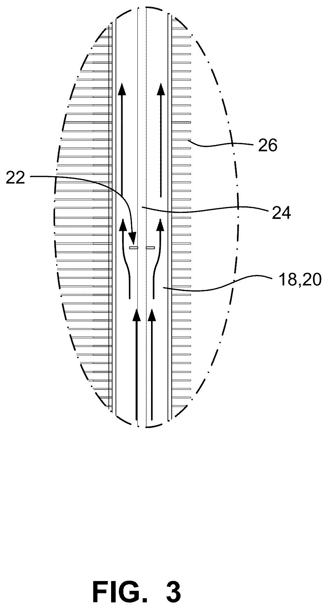

With reference to FIG. 3, at least some of the core tubes 18 and the outer tubes 20 are provided with internal turbulators 22. These tubes 18, 20 may include a central shaft 24 to which the internal turbulators 22 are secured. In some embodiments, the internal turbulators 22 may be disks secured along the central shaft 24.

With continued reference to FIG. 3, the core tubes 18 and the outer tubes 20 may be fin tubes with a plurality of external fins 26. The external fins 26 serve to enhance heat transfer efficiency by increasing the surface area available for heat exchange. That is, the fins allow more effective dissipation of heat from the fluid inside the tube to the surrounding air or cooling medium. The fins 26 may be coated with a metallic paint for better heat transfer.

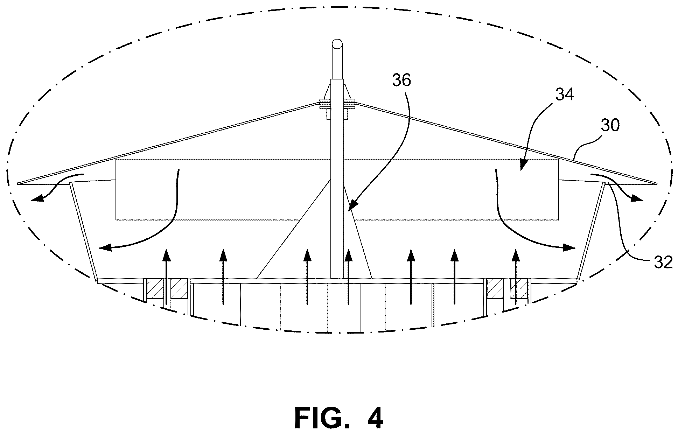

An upper compartment 28 of the vapor condenser is disposed at distal ends of the core and outer tubes 18, 20. The upper compartment 28 includes a condenser lid 30 and a circumferential outlet passage 32 between the distal ends of the core and outer tubes 18, 20 and the condenser lid 30. In some embodiments, with reference to FIG. 4, the condenser lid 30 extends radially outward of the outlet passage 32 such that the outlet passage 32 and the condenser lid 30 define a flow turn.

The upper compartment 28 may also include a vertical cylindrical drip ring 34 that directs condensed liquids to a collection area. The drip ring 34 attached to the underside of the top rain hood collects the vertically rising fumes causing turbulence to slow the flow of fumes exposed to the underside of the rain hood. Fume condensation continues with more cold surface area. The fumes accumulate as condensation continues and the less dense fumes overflow downward out of the drip ring 34 into the upper compartment 28. The vapors free of condensate and blue smoke are forced upward and out of the condenser through a circumferential gap under the rain hood into the atmosphere.

The upper compartment 28 may also secure a lifting eye 36 that extends through the condenser and supports the condenser components. The lifting eye 36 serves as a lifting point for a crane or other lifting structure for installation or removal of the condenser on top of the asphalt tank.

In use, fumes from the asphalt tank are directed to the core tubes 18 and the outer tubes 20 via the restricted orifice 16. As noted, in some embodiments, more of the fumes may be directed to the outer tubes 20 where they are better subjected to air movement by wind and air temperature. As the fumes flow upward through the tubes 18, 20, the flow turbulators 22 serve to improve heat transfer from the fumes to the inside surface of the tubes 18, 20, improving the performance and overall heat transfer efficiency. The flow of fumes through the tubes 18, 20 is at a low velocity. Creating turbulence inside the tubes increases the heat transfer efficiency as turbulent flow has more energy relative to a slow-moving laminar flow and makes for increased contact between the fumes and the thin tube walls. The turbulence created by the flow turbulators 22 forces the fumes to the inside of the tube walls for more heat transfer and creates turbulence behind the restriction to mix and further wash the inside walls of the tubes using the fumes.

Inside the atmospheric fin-tubed condenser, the asphalt vapors are cooled as ambient cool air and wind reach the shell side or exterior of the finned cooling tubes, lower and upper compartments. The cooled vapors transition from a gas to a liquid state. Condensate is separated from the remaining gases, usually collecting in a storage vessel below by gravity. The non-condensable gases, which might include air or other inert gases, may be exhausted to atmosphere via the outlet passage 32.

By design, the restriction to flow or pressure drop inside the condenser is less than the force that would be required to allow the fumes to escape from inside the asphalt tank to an overflow pipe and down the length of the pipe dictated by the height of the tank, and exit the pipe. The fume condenser is designed using the physical sciences to ensure that the buoyancy force of displaced air, the fume flow velocity pressure, and gaseous friction pressure drop through the condenser are less than the amount of force needed that would permit the fumes to exit from inside the tank to the outside of the tank through the tank internal overflow pipe outlet. The condenser is designed with little to no velocity pressure drop within the finned tubes to assure the fume flow pressure is lower than the pressure needed to force the fumes through the alternate liquid tank internal overflow pipe.

The recovered liquid hydrocarbons can be reused in the asphalt production process, reducing material waste. Any remaining non-condensable gases can be either vented safely or further treated before being released into the atmosphere.

By capturing and condensing vapors, the vapor condenser of the described embodiments ensures that harmful emissions are minimized, protecting both the environment and workers while enhancing operational efficiency without the need for fiber filter media or a convoluted piping path for the fumes to exit the condenser.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A vapor condenser for an asphalt tank comprising:
an inlet passage;
a plurality of centrally positioned core tubes;
a plurality of outer tubes disposed surrounding the core tubes;
a lower compartment disposed between the inlet passage and the core and outer tubes, the lower compartment being configured to distribute fumes from the inlet passage into the core and outer tubes; and
an upper compartment disposed at distal ends of the core and outer tubes, the upper compartment including a condenser lid and an outlet passage between the distal ends of the core and outer tubes and the condenser lid.

2. A vapor condenser according to claim 1, wherein the lower compartment is configured to distribute more fumes to the outer tubes than to the core tubes.

3. A vapor condenser according to claim 1 or claim 2, wherein the lower compartment comprises a restricted orifice in fluid communication with the inlet passage.

4. A vapor condenser according to any preceding claim, wherein at least some of the core tubes and the outer tubes comprise internal turbulators; and optionally
wherein the at least some of the core tubes and the outer tubes comprise a central shaft, and wherein the internal turbulators comprise disks secured along the central shaft.

5. A vapor condenser according to any preceding claim, wherein the core and outer tubes comprise fin tubes.

6. A vapor condenser according to claim 5, wherein the fin tubes comprise exterior fins; and optionally
wherein the exterior fins are coated with a metallic paint.

7. A vapor condenser according to any preceding claim, wherein the condenser lid extends radially outward of the outlet passage such that the outlet passage and the condenser lid define a flow turn.

8. A vapor condenser according to any preceding claim, wherein the upper compartment comprises a drip ring that directs condensed liquids to a collection area.

9. A vapor condenser according to any preceding claim, wherein the lower compartment, the core and outer tubes, and the upper compartment are configured to effect a pressure drop inside the condenser that is less than a force required to allow the fumes to escape from inside the asphalt tank to an overflow pipe.

10. A vapor condenser for an asphalt tank comprising:
an inlet passage;
a plurality of centrally positioned core tubes;
a plurality of outer tubes disposed surrounding the core tubes;
a lower compartment disposed between the inlet passage and the core and outer tubes, the lower compartment including a restricted orifice that is configured to distribute fumes from the inlet passage into the core and outer tubes, wherein the restricted orifice distributes more of the fumes to the outer tubes than to the core tubes; and
an upper compartment disposed at distal ends of the core and outer tubes, the upper compartment including a condenser lid an outlet passage between the distal ends of the core and outer tubes and the condenser lid, wherein the condenser lid extends radially outward of the outlet passage such that the outlet passage and the condenser lid define a flow turn.

11. A vapor condenser according to claim 10, wherein at least some of the core tubes and the outer tubes comprise internal turbulators.; and optionally
wherein the at least some of the core tubes and the outer tubes comprise a central shaft, and wherein the internal turbulators comprise disks secured along the central shaft.

12. A vapor condenser according to claim 10 or claim 11, wherein the core and outer tubes comprise fin tubes.

13. A vapor condenser according to claim 12, wherein the fin tubes comprise exterior fins; and optionally
wherein the exterior fins are coated with a metallic paint.

14. A method of condensing vapors from an asphalt tank with a vapor condenser that includes an inlet passage, a plurality of centrally positioned core tubes, a plurality of outer tubes disposed surrounding the core tubes, a lower compartment disposed between the inlet passage and the core and outer tubes, and an upper compartment disposed at distal ends of the core and outer tubes, the method comprising:
(a) distributing fumes from the inlet passage into the core and outer tubes;
(b) creating turbulence of the fumes inside the core and outer tubes;
(c) cooling the fumes as the fumes flow upward through the core and outer tubes to distal ends of the core and outer tubes;
(d) condensing vapors from the fumes; and
(e) directing the fumes to an outlet passage between the distal ends of the core and outer tubes and a condenser lid.

15. A method according to claim 14, wherein step (a) is practiced by distributing more of the fumes to the outer tubes than to the core tubes.
